# EUROPÄISCHE PATENTANMELDUNG

(11) **EP 0 522 396 A2**
(43) Veröffentlichungstag der Anmeldung: **13.01.1993**
(21) Anmeldenummer: 92110958.3
(22) Anmeldetag: 29.06.1992
(51) Int. Cl.: C08G 64/40, C08G 65/32, C08G 85/00

(54) **Verfahren zur Herstellung von Ald- oder Ketimingruppen aufweisenden Verbindungen und die bevorzugten nach diesem Verfahren erhältlichen Verbindungen**

(30) Priorität: 10.07.1991 DE 4122766
(71) Anmelder: BAYER AG, 51368 Leverkusen (DE)
(72) Erfinder: Schäfer, Walter, Dr., W-5653 Leichlingen (DE); Müller, Hanns Peter, Dr., W-5068 Odenthal (DE)

(57) **Zusammenfassung**

Ein Verfahren zur Herstellung von Ald- oder Ketimingruppen aufweisenden organischen Verbindungen durch Umsetzung von β-Ketoestergruppen aufweisenden Verbindungen mit Bis-ald- oder -ketiminen unter Abspaltung von Aldehyd oder Keton und die bevorzugten, nach diesem Verfahren erhältlichen Verbindungen.

## Beschreibung

Die Erfindung betrifft ein neues Verfahren zur Herstellung von Ald- oder Ketimingruppen aufweisenden Verbindungen durch Umsetzung von β-Ketoestergruppen aufweisenden Verbindungen mit Bis-ald- oder -ketiminen unter Abspaltung eines Teils der diesen Verbindungen zugrundeliegenden Aldehyde bzw. Ketone und die bevorzugten, nach diesem Verfahren erhaltenen, Ketimingruppen aufweisenden Verbindungen.

Als Ald- oder Ketimin vorliegende organische Polyamine stellen wertvolle potentielle, unter dem Einfluß von Hitze und/oder Feuchtigkeit aktivierbare Reaktionspartner für organische Polyisocyanate, Polyanhydride oder Polyepoxide bei der Herstellung von Kunststoffen auf Basis dieser Ausgangsmaterialien dar (vgl. z.B. DE-OS 1 520 139, DE-OS 1 719 121, DE-OS 3 710 963 oder DE-OS 3 742 123).

Zur Herstellung dieser blockierten Amine werden primäre Amine mit Aldehyden bzw. Ketonen unter Erhitzen auf oberhalb 60°C liegende Temperaturen zur Reaktion gebracht.

Amine, die gegenüber Aminogruppen bei erhöhten Temperaturen reaktionsfähige Zentren aufweisen, beispielsweise Ester- oder Carbonatgruppen aufweisende Amine, können für dieses Verfahren nur schlecht als Ausgangsmaterial eingesetzt werden, da Nebenreaktionen nicht ausgeschlossen werden können. Im übrigen erfordert beispielsweise die Überführung der aus der Polyurethanchemie bekannten Polyester-, Polyether- oder Polycarbonatpolyole in die entsprechenden Derivate mit endständigen Ald- oder Ketimingruppen nach der alten Vorgehensweise zunächst eine Überführung der endständigen Hydroxylgruppen in primäre Aminogruppen nach mehr oder weniger umständlichen Verfahren.

Jetzt wurde ein einfaches, universell anwendbares Verfahren zur Herstellung von Ald- oder Ketimingruppen aufweisenden Verbindungen gefunden, welches darauf beruht, daß man β-Ketoestergruppen enthaltende Verbindungen mit Bis-ald- oder -ketiminen in Gegenwart einer katalytischen Menge Wasser bei vergleichsweise niederen Reaktionstemperaturen nach dem allgemeinen Reaktionsschema 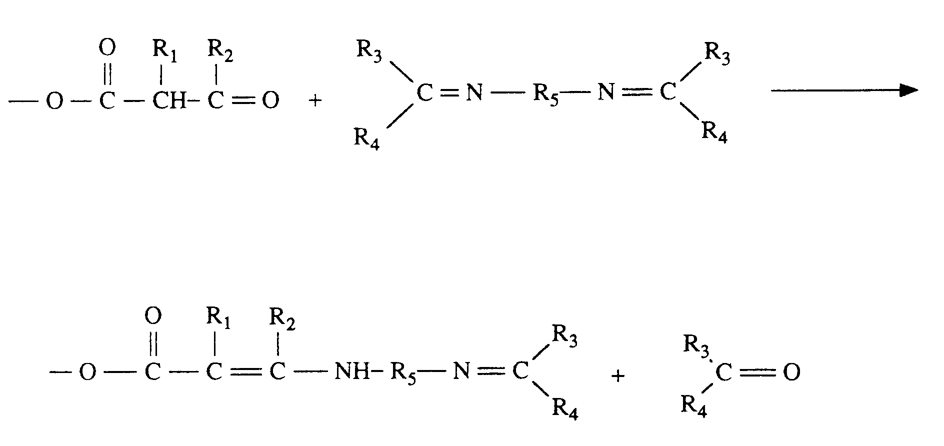
zur Reaktion bringt. In diesen Formeln haben die Variablen beispielsweise die nachstehend genannte Bedeutung. Im Falle der weniger bevorzugten Verwendung von Aldiminen als Reaktionspartner für die β-Ketoester steht selbstverständlich der Rest R₃ für Wasserstoff. Die Umsetzung zwischen β-Ketoestergruppen aufweisenden Verbindungen und Bis-ald- bzw. -Ketiminen war zwar aus der US-PS 3 668 183 bereits bekannt, jedoch werden gemäß dieser Vorveröffentlichung unter Verwendung von nahezu äquivalenten Mengen der Ausgangsmaterialien Klebstoffe hergestellt. Es war nicht zu erwarten, daß bei der erfindungsgemäßen Umsetzung der genannten Ausgangsmaterialien unter Einhaltung eines Molverhältnisses von Ald- bzw. Ketimingruppen zu Ketoestergruppen von ca. 2:1 Kettenverlängerungs- bzw. Vernetzungsreaktionen praktisch völlig unterbleiben und Umsetzungsprodukte resultieren, die eine deutlich niedrigere Viskosität aufweisen als analoge, endständige Ketimingruppen aufweisende Verbindungen, die durch Umsetzung von analogen Polyaminoverbindungen mit Ketonen erhalten werden.

Gegenstand der Erfindung ist ein Verfahren zur Herstellung von Ald- oder Ketimingruppen aufweisenden organischen Verbindungen, dadurch gekennzeichnet, daß man β-Ketoestergruppen aufweisende organische Verbindungen innerhalb des Temperaturbereichs von 0 bis 80°C mit 0,75 bis 1,0 Mol pro Mol Ketoestergruppen eines Bis-ald- oder -ketimins in Gegenwart einer katalytischen Menge Wasser unter Abspaltung einer, der Menge der umgesetzten Ketoestergruppen äquivalenten Menge Aldehyd oder Keton zur Reaktion bringt.

Gegenstand der Erfindung sind auch die bevorzugten nach diesem Verfahren erhältlichen, endständige Ketimingruppen aufweisenden Verbindungen der Formel III 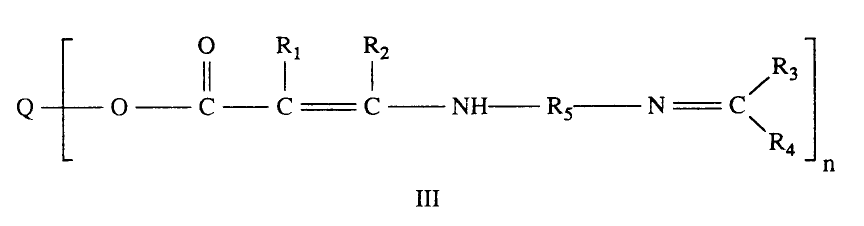
in welcher
- Q: für einen n-wertigen Rest steht, wie er durch Entfernung der Hydroxylgruppen aus einer n-wertigen Hydroxylverbindung mit primären und/oder sekundären Hydroxylgruppen des Molekulargewichtsbreichs Mₙ 62 bis 15.000 erhalten wird,
- R₁: für Wasserstoff steht oder mit dem Rest R₂ durch eine C-C-Bindung verknüpft ist und mit diesem einen Tri- oder Tetramethylenrest bildet,
- R₂: für eine Methyl- oder Ethylgruppe steht oder die so eben genannte Bedeutung hat,
- R₃: für einen Alkylrest mit 1 bis 9 Kohlenstoffatomen oder einen Cyclohexylrest steht oder zusammen mit dem Kohlenstoffatom und dem Rest R₄ einen cycloaliphatischen Ring mit fünf oder sechs Ringgliedern bildet,
- R₄: für einen Alkylrest mit 1 bis 9 Kohlenstoffatomen steht oder die so eben genannten Bedeutung hat,
- R₅: für einen (cyclo)aliphatischen Kohlenwasserstoffrest mit 2 bis 15 Kohlenstoffatomen steht und
- n: eine Zahl von 2 bis 15 bedeutet.

Bei den Ausgangsverbindungen für das erfindungsgemäße Verfahren handelt es sich einerseits um mindetens 2 β-Ketoestergruppen aufweisende organische Verbindungen und andererseits um Bis-ald- oder -ketimine, vorzugsweise Bis-ketimine der nachstehend näher beschriebenen Art.

Die β-Ketoestergruppen aufweisenden Verbindungen basieren auf Polyhydroxylverbindungen der aus der Polyurethanchemie an sich bekannten Art. Die Überführung dieser Polyhydroxylverbindungen in die β-Ketoestergruppen aufweisenden Ausgangsmaterialien des erfindungsgemäßen Verfahrens geschieht nach an sich bekannten Methoden, beispielsweise durch Umsetzung mit Diketen bzw. einem Acetessigsäureester (vgl. z.B. US-PS 3 668 183) oder durch völlig analoge Umsetzung mit Cyclopentan-2-on- oder Cyclohexan-2-on-carbonsäureestern einfacher Alkohole, beispielsweise des Ethanols.

Bei allen diesen Umsetzungen wird vorzugsweise so vorgegangen, daß man die als Ausgangsmaterial eingesetzte Polyhdroxylverbindung mit den beispielhaft genannten Reaktanten unter Einhaltung eines Molverhältnisses von Hydroxylgruppen zu Reaktant von 1:1 bis 1:1,5 auf ca. 100 bis 200°C erhitzt, wobei das Ende der Reaktion im Falle der Verwendung der beispielhaft genannten Ester als "Reaktant" am Ende der Alkohol-Abspaltung erkannt werden kann. Die Umsetzung kann in Substanz oder auch in Gegenwart von Lösungsmitteln wie beispielsweise Benzol oder Toluol durchgeführt werden.

Zur Herstellung der beim erfindungsgemäßen Verfahren als Ausgangsmaterial einzusetzenden β-Ketoestergruppen aufweisenden Verbindungen kommen beliebige mehrwertige Alkohole des Molekulargewichtsbreichs 62 bis 15.000 mit 2 bis 15 primären oder sekundären alkoholischen Hydroxylgruppen in Betracht.

Beispielhaft zu nennen sind: Einfache mehrwertige Alkohole des Molekulargewichtsbereichs 62 bis 200 wie beispielsweise Ethylenglykol, Propylenglykol, Trimethylolpropan, Pentaerythrit, Diethylenglykol, Dipropylenglykol, Triethylenglykol oder Tripropylenglykol.

Weiterhin zu nennen sind Polyhydroxypolyether des Molekulargewichtsbereichs Mn 200 bis 15.000, vorzugsweise 250 bis 10.000 und insbesondere 1500 bis 6000, die 2 bis 6, vorzugsweise 2 bis 3 primäre oder sekundäre Hydroxylgruppen pro Molekül aufweisen. Derartige Polyetherpolyole werden in an sich bekannter Weise durch Alkoxylierung von geeigneten Startermolekülen erhalten, wobei bei der Alkoxylierungsreaktion insbesondere Ethylenoxid und/oder Propylenoxid, gegebenenfalls als Gemisch oder in beliebiger Reihenfolge zum Einsatz gelangen. Geeignete Startermoleküle sind beispielsweise die soeben genannten mehrwertigen Alkohole oder auch Amine mit mindestens 2 N-H-Bindungen wie beispielsweise Ethylendiamin. Auch Sucrosepolyether, wie sie z.B. in den deutschen Auslegeschriften 1 176 358 und 1 064 938 beschrieben werden, kommen erfindungsgemäß infrage. Auch durch Vinylpolymerisate modifizierte Polyether, wie sie z.B. durch Polymerisation von Styrol und Acrylnitril in Gegenwart von Polyethern entstehen (amerikanische Patentschriften 3 383 351, 3 304 273, 3 523 093, 3 110 695, deutsche Patentschrift 1 152 536), sind geeignet, ebenso OH-Gruppen aufweisende Polybutadiene.

Weiterhin geeignet sind die aus der Polyurethanchemie an sich bekannten Polyhydroxypolyester des Molekulargewichtsbereichs Mn zu 150 bis 15 000, vorzugsweise 150 bis 10 000 und besonders bevorzugt 1 500 bis 6 000, die im allgemeinen 2 bis 6 Hydroxylgruppen pro Molekül aufweisen. Es handelt sich hierbei um Umsetzungsprodukte von überschüssigen Mengen an zweiwertigen und gegebenenfalls zusätzlich dreiwertigen, niedermolekularen Alkoholen der bereits beispielhaft genannten Art mit mehrwertigen, vorzugsweise zweiwertigen Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls Halogenatome enthalten und/oder ungesättigt sein. Als Beispiele hierfür seien genannt: Bernsteinsäure, Adipinsäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Endomethylentetrahydrophthalsäureanhydrid, Glutarsäureanhydrid, Maleinsäure, Maleinsäureanhydrid, Fumarsäure, Terephthalsäuredimethylester und Terephthalsäure-bis-glykolester. Auch Polyester aus Lactonen, z.B. ε-Caprolacton oder Hydroxycarbonsäuren, z.B. -Hydroxycapronsäuren, sind einsetzbar.

Ferner geeignet sind Polycarbonatdiole des Molekulargewichtsbereichs Mn 200 bis 15 000, vorzugsweise 1 500 bis 6 000 wie sie z.B. durch Umsetzung von Diolen wie Propandiol-(1,3), Butandiol-(1,4) und/oder Hexandiol-(1,6), Diethylenglykol, Triethylenglykol, Tetraethylenglykol mit Diarylcarbonaten, z.B. Diphenylcarbonat oder Phosgen, hergestellt werden können.

Zu den bevorzugten Polyhydroxylverbindungen gehören außerdem Polyhydroxypolyacrylate des Molekulargewichtsbereichs Mn 1 000 bis 15 000, vorzugsweise 3 000 bis 12 000, die im allgemeinen 1 bis 10 Gew.-% an Hydroxylgruppen bei einer mittleren Hydroxylfunktionalität von 2 bis 15, vorzugsweise 3 bis 12, aufweisen. Diese Verbindungen werden in an sich bekannter Weise durch Copolymerisation von olefinisch ungesättigten Monomeren unter Mitverwendung von Hydroxylgruppen aufweisenden, olefinisch ungesättigten Monomeren hergestellt. Geeignete Monomere sind beispielsweise Acrylsäure- und/oder Methacrylsäurealkylester mit 1 bis 6 Kohlenstoffatomen im Alkylrest wie beispielsweise Methylacrylat, Methylmethacrylat, Ethylacrylat, Ethylmethacrylat, n-Butylacrylat oder n-Hexylmethacrylat und/oder Styrol. Geeignete hydroxyfunktionelle Monomere sind beispielsweise Hydroxyalkylester der Acrylsäure oder Methacrylsäure mit 2 bis 6 Kohlenstoffatomen im Hydroxyalkylrest, wie beipsielsweise Hydroxyethyl-, 2-Hydroxypropyl-, 3-Hydroxypropyl-, 4-Hydroxybutyl- oder 6-Hydroxyhexylacrylat oder -methacrylat.

Die genannten Molekulargewichte lassen sich im Falle der Polyetherpolyole und der Polycarbonatdiole einfach aus Hydroxylgruppengehalt und Funktionalität errechnen und können im Falle der Polyesterpolyole und Polyacrylatpolyole dampfdruckosmometrisch bestimmt werden.

Die bevorzugten beim erfindungsgemäßen Verfahren einzusetzenden, β-Ketoestergruppen aufweisenden Verbindungen entsprechen der allgemeinen Formel I 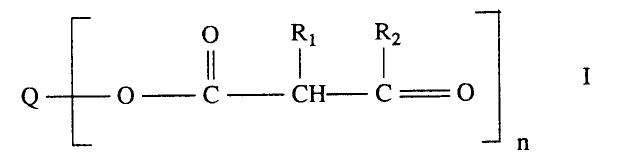
für welche
Q, R₁, R₂ und n die bereits oben genannte Bedeutung haben.

Die beim erfindungsgemäßen Verfahren einzusetzenden Ald- bzw. Ketimine sind die Umsetzungsprodukte von Ketonen bzw. Aldehyden mit primären Diaminen, deren Herstellung z.B. in US-PS 3 668 183 oder US-PS 4 513 112 beschrieben wird. Die Bisketimine sind gegenüber den Bisaldiminen bevorzugt.

Bevorzugt einzusetzende Ketone sind Aceton, Methylethylketon, Methyl-n-propylketon, Diethylketon, Methyl-n-amylketon, Diisobutylketon, Methyl-t-butylketon, Methyl-n-heptylketon, Cyclopentanon oder Cyclohexanon.

Zur Herstellung von Bis-aldiminen können beispielsweise folgende Aldehyde eingesetzt werden:

Acetaldehyd, Propionaldehyd, n-Butyraldehyd, Isobutyraldehyd, n-Valeraldehyd, Isovaleraldehyd, Capronaldehyd, Heptanal, 3-Formyl-heptan oder Formylcyclohexan.

Bevorzugt einzusetzende Diamine sind beispielsweise Ethylendiamin, Hexamethylendiamin, 1,4-Diaminocyclohexan, 4,4'-Diamino-dicyclohexylmethan, 1-Amino-3,3,5-trimethyl-5-aminomethyl-cyclohexan, ferner, jedoch weniger bevorzugt, niedermolekulare Aminopolyether wie beispielsweise die Aminierungsprodukte von Triethylenglykol oder Tripropylenglykol. Auch araliphatische Diamine wie beispielsweise 1,4-Xylylendiamin sind im Prinzip geeignet, jedoch weniger bevorzugt.

Besonders bevorzugt werden beim erfindungsgemäßen Verfahren Bisketimine der Formel 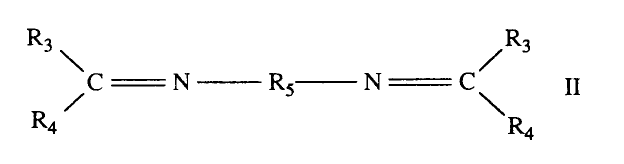
eingesetzt, in welcher
R₃ bis R₅ die bereits oben genannte Bedeutung haben.

Beim erfindungsgemäßen Verfahren werden die β-Keterestergruppen enthaltenden Verbindungen und die Ald- bzw. Ketimine in solchen Mengenverhältnissen miteinander zur Reaktion gebracht, daß auf jede β-Ketoestergruppe 1,5 bis 2, vorzugsweise 2 Ald- bzw. Ketimingruppen entfallen, d.h. das Molverhältnis von β-Ketoestergruppen zu Bis-Ald- bzw. -ketimin liegt bei 1:0,75 bis 1:1, vorzugsweise bei 1:1. Die Umsetzung erfolgt in Gegenwart einer katalytischen Menge Wasser, d.h. im allgemeinen in einer Menge von 0,005 bis 0,1 Mol Wasser pro Mol β-Ketoestergruppen. Die Reaktionstemperatur liegt bei 0 bis 80, vorzugsweise 10 bis 50°C. Die Umsetzung läßt sich IR-spektroskopisch anhand des Verlusts an Intensität der Banden bei ca. 1750 und 1720 cm⁻¹ (β-Ketoesterbande) und dem Wachsen der Bande bei ca. 1610 cm⁻¹ (Esterenaminbande) verfolgen.

Die erfindungsgemäße Umsetzung kann in Gegenwart von geeigneten Lösungsmitteln wie beispielsweise Toluol oder Xylol vorgenommen werden. Im Anschluß an die Umsetzung wird das Reaktionsgemisch destillativ, vorzugsweise im Vakuum von flüchtigen Bestandteilen (z.B. Lösungsmittel oder abgespaltene Carbonylverbindungen) befreit.

Der Gehalt der Verfahrensprodukte an blockierten Aminogruppen in Form von Ald- oder Ketimingruppen kann analytisch durch Deblockierung mit Wasser, Umsetzung des freigesetzten Amins mit einem Überschuß eines Isocyanats, beispielsweise Cyclohexylisocyanat und anschließende Bestimmung des Diisocyanats-Überschusses nach an sich bekannten Methoden erfolgen.

Die nach dem erfindungsgemäßen Verfahren hergestellten Verbindungen mit über Enamingruppen gebundenen Ald- oder Ketimingruppen stellen wertvolle potentielle unter dem Einfluß von Wasser bzw. Feuchtigkeit aktivierbare Vernetzerkomponenten für Isocyanat- oder Carbonsäureanhydridgruppen aufweisende Kunststoffvorläufer insbesondere für Bindemittel auf Basis derartiger Verbindungen für Beschichtungsmittel dar. Entsprechende Beschichtungsmittel eignen sich zur Beschichtung beliebiger Substrate unter Verwendung der üblichen Methoden der Beschichtungstechnologie.

### Beispiel 1

62,5 g (0,056 mol OH) eines verzweigten Terephthalat-Polyesters aus 269 Gew.-Teilen Terephthalsäure, 147 Gew.-Teilen Neopentylglykol, 21 Gew.-Teilen 1,6-Hexandiol und 18 Gew.-Teilen Trimethylolpropan werden in 62,5 g Xylol gelöst, mit 9,72 g (0,061 mol) Acetessigsäure-tert.-butylester versetzt und bei 130°C 3 Stunden lang gerührt, wobei tert.-Butanol und ein Teil des Xylols über eine Brücke abdestilliert werden. Anschließend wird das Reaktionsprodukt bei 140°C und 0,1 mbar innerhalb von 30 min. vom tert-Butanol und vom Lösungsmittel befreit. Bei ca. 125°C werden unter Rühren zum Produkt 120 ml Xylol zugefügt, und dann läßt man das Produkt auf RT abkühlen. Zur Herstellung des Polyketimins werden 15,6 g (0,056 mol) des Bisketimins auf Basis von 1-Amino-3,3,5-trimethyl-5-aminomethyl-cyclohexan (IPDA) und Methylethylketon zusammen mit 0,07 g Wasser in die Reaktionslösung gegeben und 0,5 Stunden bei 50°C gerührt. Die Lösung des Polyketimins hat einen Feststoffgehalt von 45,8 Gew.-%. Nach Verseifung mit Wasser läßt sich ein Amingehalt von 0,065 Mol pro 100 Feststoff titrieren.

### Beispiel 2

125 g (0,125 mol OH) Polypropylenglykol des Molekulargewichts 2000 und 25 g (0,158 mol) Acetessigsäure-tert.-butylester werden für eine Stunde unter Rühren auf 140°C aufgeheizt, wobei tert.-Butanol abdestilliert wird. Das Reaktoinsprodukt wird anschließend bei 140°C und 0,1 mbar vom restlichen tert.-Butanol und überschüssigem Acetessigsäure-tert.-butylester befreit.

34.75 g (0,125 mol) des Bisketimins auf Basis von IPDA und Methylethylketon werden zusammen mit 0,05 g Wasser in das Reaktionsgemisch gegeben und 30 min. bei 50°C gerührt, wobei das Enamingruppen enthaltende Ketimin gebildet wird, ersichtlich am Verschwinden der β-Ketoesterbande bei 1750 cm⁻¹.

Das Reaktionsgemisch wird anschließend bei einem Vakuum von 0,1 mbar und einer Temperatur von 100°C von allen flüchtigen Bestandteilen befreit. Das als Rückstand anfallende Reaktionsprodukt weist eine Viskosität von η₂₅ = 800 mPa.s auf. Nach dem Verseifen mit Wasser läßt sich ein Amingehalt von 0,05 Mol pro 100 g der Ketiminverbindung titrieren.

### Vergleichsbeispiel

125 g (0,125 mol OH) Polypropylenglykol des Molekulargewichts 2000 und 25 g (0,158 mol) Acetessigsäure-tert.-butylester werden für eine Stunde unter Rühren auf 140°C aufgeheizt, wobei tert.-Butanol abdestilliert wird. Das Reaktionsprodukt wird anschließend bei 140°C und 0,1 mbar vom restlichen tert.-Butanol und überschüssigem Acetessigsäure-tert.-butylester befreit. 21,2 g (0,125 mol) IPDA werden zusammen mit 100 ml Toluol in das Reaktionsgemisch gegeben und eine halbe Stunde bei 50°C gerührt. Es werden 45 g (0,625 mol) Methylethylketon zugefügt und 6 Stunden unter Rückfluß über Zeolith getrocknet. Nach dem Einengen bei 100°C und 0,1 mbar erhält man ein Produkt einer Viskosität von η_{25°C}= 2000 mPa.s.

### Beispiel 3

125 g (0,125 mol OH) Polypropylenglykol des Molekulargewichts 2000 und 25 g (0,158 mol) Acetessigsäure-tert.-butylester werden für eine Stunde unter Rühren auf 140°C aufgeheizt, wobei tert.-Butanol abdestilliert wird. Das Reaktionsprodukt wird anschließend bei 140°C und 0,1 mbar vom restlichen tert.-Butanol und überschüssigem Acetessigsäure-tert.-butylester befreit.

28 g (0,125 mol) des Bisketimins auf Basis von Hexamethylendiamin und Methylethylketon werden zusammen mit 0,05 g Wasser in das Reaktionsgemisch gegeben und 30 min. bei 50°C gerührt, wobei das Enamingruppen enthaltende Ketimin gebildet wird, ersichtlich am Verschwinden der β-Ketoesterbande bei 1750 cm⁻¹. Nach dem Verseifen mit Wasser läßt sich ein Amingehalt von 0,05 Mol pro 100 g der Ketiminverbindung titrieren.

### Beispiel 4

25 g (0,187 mol) trockenes Trimethylolpropan, 93,7 g (0,593 mol) Acetessigsäure-tert.-butylester werden für eine Stunde unter Rühren auf 140°C aufgeheizt, wobei wert.-Butanol abdestilliert wird. Das Reaktionsprodukt wird anschließend bei 140°C und 0,1 mbar vom restlichen tert.-Butanol und überschüssigem Acetessigsäure-tert.-butylester befreit. 155,62 g (0,56 mol) des Bisketimins auf Basis von IPDA und Methylethylketon werden zugegeben, und das Reaktionsgemisch wird 30 min. bei 50°C zusammen mit 0,05 g Wasser gerührt, wobei das Enamingruppenenthaltende Ketimin gebildet wird. Nach Verseifen mit Wasser läßt sich ein Amingehalt von 0,24 Mol pro 100 g Polyketimin titrieren.

## Patentansprüche

1. Verfahren zur Herstellung von Ald- oder Ketimingruppen aufweisenden organischen Verbindungen, dadurch gekennzeichnet, daß man β-Ketoestergruppen aufweisende organische Verbindungen innerhalb des Temperaturbereichs von 0 bis 80°C mit 0,75 bis 1,0 Mol pro Mol Ketoestergruppen eines Bis-ald- oder -ketimins in Gegenwart einer katalytischen Menge Wasser unter Abspaltung einer, der Menge der Ketoestergruppen äquivalenten Menge Aldeyhd oder Keton zur Reaktion bringt.

2. Verfahren gemäß Anspruch 1 und 2, dadurch gekennzeichnet, daß man als β-Ketoestergruppen aufweisende Verbindungen solche der Formel I 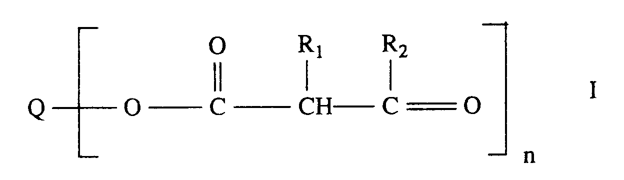 verwendet, für welche
Q für einen n-wertigen Rest steht, wie er durch Entfernung der Hydroxylgruppen aus einer n-wertigen Polyhydroxylverbindung mit primären und/oder sekundären alkoholischen Hydroxylgruppen des Molekulargewichtsbereichs 62 bis 15.000 erhalten wird,
R₁ für Wasserstoff steht, oder mit dem Rest R₂ mit einer C-C-Bindung verknüpft ist und mit diesem einen Tri- oder Tetramethylenrest bildet,
R₂ für eine Methyl- oder Ethylgruppe steht oder die soeben genannte Bedeutung hat und
n für eine Zahl von 2 bis 15 steht.

3. Verfahren gemäß Anspruch 1 und 2, dadurch gekennzeichnet, daß man als Reaktionspartner für die β-Ketoestergrupen enthaltende Verbindungen bis Ketimine der Formel II 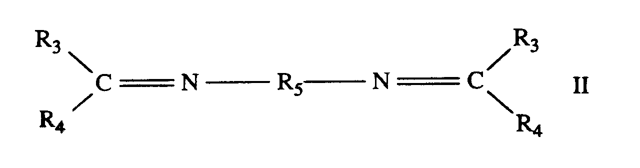 verwendet, wobei
R₃ für einen Alkylrest mit 1 bis 9 Kohlenstoffatomen oder einen Cyclohexylrest steht oder zusammen mit dem Kohlenstoffatom und dem Rest R₄ einen cycloaliphatischen Ring mit 5 oder 6 Ringgliedern bildet,
R₄ für einen Alkylrest mit 1 bis 9 Kohlenstoffatomen steht oder die soeben genannte Bedeutung hat und
R⁵ für eine (cyclo)aliphatischen Kohlenwasserstoffrest mit 2 bis 15 Kohlenstoffatomen steht.

4. Ketimingruppen aufweisende organische Verbindungen der Formel III 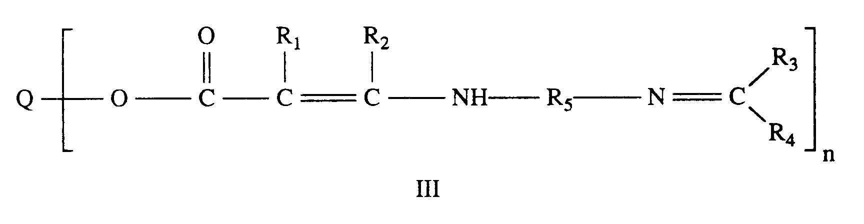 in welcher
Q, R₁, R₂, R₃, R₄, R₅ und n die in Anspruch 2 bzw. 3 genannte Bedeutung haben.
